**Europäisches Patentamt**

**European Patent Office**

**Office européen des brevets**

(11) Veröffentlichungsnummer: **0 161 566**
**A2**

## EUROPÄISCHE PATENTANMELDUNG

(21) Anmeldenummer: 85105144.1

(22) Anmeldetag: 26.04.85

(51) Int. Cl.⁴: **A 47 J 41/02**

(30) Priorität: 14.05.84 DE 3417889

(43) Veröffentlichungstag der Anmeldung: 21.11.85
Patentblatt 85/47

(84) Benannte Vertragsstaaten: **AT BE CH DE FR GB IT LI LU NL SE**

(71) Anmelder: **Rotpunkt Dr. Anso Zimmermann, Industriestrasse, D-6434 Niederaula / Bad Hersfeld (DE)**

(72) Erfinder: **Zimmermann, Anso, Dr., Seilerweg 34, D-6430 Bad Hersfeld (DE)**

(74) Vertreter: **Körber, Wolfhart, Dr. et al, Patentanwälte Dipl.-Ing. H. Mitscherlich Dipl.-Ing. K. Gunschmann Dr.rer.nat. W. Körber Dipl.Ing. J. Schmidt-Evers Dipl.-Ing. W. Melzer Steinsdorfstrasse 10, D-8000 München 22 (DE)**

(54) **Verschluss für Isolierkannen oder -flaschen.**

(57) Die Erfindung bezieht sich auf einen Verschluß für Isolierkannen oder -flaschen, bestehend aus einem Isoliergefäß, einem dieses umgebenden Schutzgehäuse und einem Verschluß für die zu verschließende Öffnung, wobei mittelbar oder unmittelbar am Verschluß ein in das Isoliergefäß ragender Sieb-Hohlkörper gehalten ist. Es ist der Zweck der Erfindung, den Verschluß so auszubilden, daß eine leichte Reinigung des Sieb-Hohlkörpers möglich ist. Dies wird dadurch erreicht, daß der Sieb-Hohlkörper (14) an seinem in das Isoliergefäß (1) hineinragenden Ende ein lösbares und wieder festlegbares Bodenteil (17) aufweist.

## Verschluß für Isolierkannen oder -flaschen

Die Erfindung bezieht sich auf einen Verschluß nach dem Oberbegriff des Anspruches 1.

Ein Verschluß dieser Bauart ist im DE-GM 82 33 625 beschrieben und dargestellt. Die bekannte Bauart ermöglicht es, Tee oder dergleichen Getränke in der Isolierkanne oder -flasche zuzubereiten, wobei die Teeblätter in einen Sieb-Hohlkörper einzugeben sind, der an der Unterseite des Verschlusses festlegbar ist. Der Sieb-Hohlkörper ist topfförmig ausgebildet mit einer Öffnung an dem Ende, das zum Verschluß hinweist. Infolgedessen dient der Verschluß nicht nur dem Verschließen bzw. Öffnen der Öffnung des Isoliergefäßes und der Halterung des Sieb-Hohlkörpers, sondern auch gleichzeitig dem Verschließen der Öffnung des Sieb-Hohlkörpers.

Bei der Benutzung eines Sieb-Hohlkörpers setzt sich der Teesatz zwangsläufig am Boden des Sieb-Hohlkörpers ab. Dies gilt auch für einen Teesatz, der auf dem Tee schwimmt, weil spätestens beim Herausnehmen des Sieb-Hohlkörpers der Teesatz auf dessen Boden sinkt. Infolgedessen läßt sich bei der bekannten Bauart der Sieb-Hohlkörper nur erschwert reinigen.

Der Erfindung liegt die Aufgabe zugrunde, einen Verschluß der eingangs bezeichneten Bauart so auszugestalten, daß eine leichte Reinigung des Sieb-Hohlkörpers möglich ist.

Diese Aufgabe wird durch die Merkmale des Anspruches 1 gelöst.

Bei der erfindungsgemäßen Ausgestaltung liegt der Teesatz direkt auf dem lösbaren Bodenteil des Sieb-Hohlkörpers auf. Wenn das Bodenteil gelöst wird, fällt ein Teil des Teesatzes aus dem Sieb-Hohlkörper heraus bzw. der Teesatz läßt sich sehr leicht aus dem Sieb-Hohlkörper entfernen, weil er sich im Bereich der Öffnung befindet. Bei Isolierkannen oder -flaschen ist zu berücksichtigen, daß zum einen es eines bestimmten Volumens im Sieb-Hohlkörper bedarf, um eine ausreichende Menge Teeblätter für die Zubereitung einer vollständig gefüllten Isolierkanne oder -flasche aufzunehmen, und zum anderen die Bemessung des Sieb-Hohlkörpers in der horizontalen Ebene durch die Füllöffnung des Isoliergefäßes begrenzt ist. Bei solchen Isolierkannen oder -flaschen, bei denen der Verschluß zum Ausgießen nur geringfügig von seiner Dichtfläche abgehoben wird, um einen unnötigen Wärmeverlust zu vermeiden, bedarf es darüber hinaus eines vorbestimmten Spaltes zwischen dem Sieb-Hohlkörper und dem Öffnungsrand, damit beim Ausgießen eine ausreichende Ausgießströmung gewährleistet ist. Der Sieb-Hohlkörper ist deshalb im Vergleich zu seiner Querschnittsabmessung verhältnismäßig lang, wodurch die vorbeschriebene Reinigungsschwierigkeit bedeutend vergrößert ist. Auch unter diesem Gesichtspunkt ist die erfindungsgemäße Lösung von Bedeutung. Sie ermöglicht eine im Vergleich zu seiner Querschnittsabmessung lange Ausbildung des Sieb-Hohlkörpers mit dessen leichte Reinigung. Bei der bekannten Bauart ist aufgrund der länglichen Ausgestaltung des Sieb-Hohlkörpers seine Reinigung nur mit erheblichem Aufwand möglich.

Die weitere Ausgangstaltung der Erfindung nach Anspruch 2 führt nicht nur zu einer weiteren Erleichterung der Reinigung, weil      durch Quellen festsitzender Teesatz aufgrund der Konizität leicht herausgelöst werden kann, sondern sie führt auch zu einer verbesserten Ausnutzung des zur Verfügung stehenden Raumes bei solchen Isolierkannen oder -flaschen, deren Hals im Bereich der Öffnung verjüngt ist. Eines vorbeschriebenen Spaltes zwischen dem Sieb-Hohlkörper und dem Öffnungsrand bedarf es nämlich nur im Bereich der Halsverjüngung. Unterhalb der Halsverjüngung kann der Sieb-Hohlkörper im Querschnitt so groß bemessen werden, daß seine Ein- und Herausführung durch die Öffnung gerade noch gewährleistet ist.

Die Ausbildungen nach Anspruch 3 und 4 ergeben praktische Bauformen, die nicht nur günstig herzustellen, sondern auch leicht zu handhaben sind. Die Griffigkeit des Bodenteils ist von Bedeutung, um das Einsetzen bzw. das Lösen des Bodenteils zu erleichtern.

Die Ausgestaltungen nach den Ansprüchen 5, 6 und 8 bis 10 ermöglichen      einen intensiven Kontakt der Flüssigkeit mit der Teesubstanz, so daß eine gute Auslösung bzw. Ausspülung der feinstofflichen Teesubstanzen gewährleistet ist. Dabei werden gemäß Anspruch 5 nicht nur Ecken im Sieb-Hohlkörper vermieden, in denen sich Teesatz festsetzen kann, sondern aufgrund der radialen Sieblöcher ist auch eine verbreiterte Verteilung der Teesubstanzen gegeben, was zu einer verbesserten Vermischung der Teesubstanzen mit der Flüssigkeit führt.

Da die Öffnungen bei üblichen Isolierkannen oder -flaschen rund sind, läßt sich durch die Ausgestaltung nach Anspruch 7 der zur Verfügung stehende Raum maximal aus-

4

nutzen. Die Ausbildungen nach den Ansprüchen 11 und 12 sind deshalb von Vorteil, weil zum einen der Sieb-Hohlkörper am Verschluß festlegbar ist und deshalb eine teilweise Öffnung des Verschlusses zum Zweck des Ausgießens zu keiner Beeinträchtigung der Halterung des Sieb-Hohlkörpers führt, und zum anderen der Sieb-Hohlkörper in den Fällen, in denen kein Tee oder dergleichen zubereitet werden soll, der Sieb-Hohlkörper vom Verschluß entfernt werden kann.

Im Rahmen der Erfindung ist es natürlich auch möglich, den Sieb-Hohlkörper einstückig am Verschluß anzuformen.

Nachfolgend wird ein Ausführungsbeispiel der Erfindung anhand einer vereinfachten Zeichnung beschrieben.

Es zeigt:

Fig. 1 einen lotrechten Teilschnitt durch den oberen Teil einer erfindungsgemäß ausgestalteten Isolierkanne mit Sieb-Hohlkörper;

Fig. 2 eine Unteransicht des Sieb-Hohlkörpers;

Fig. 3 eine Seitenansicht des Sieb-Hohlkörpers im teilweisen Schnitt;

Fig. 4 einen Schnitt nach der Linie IV - IV in Fig. 2.

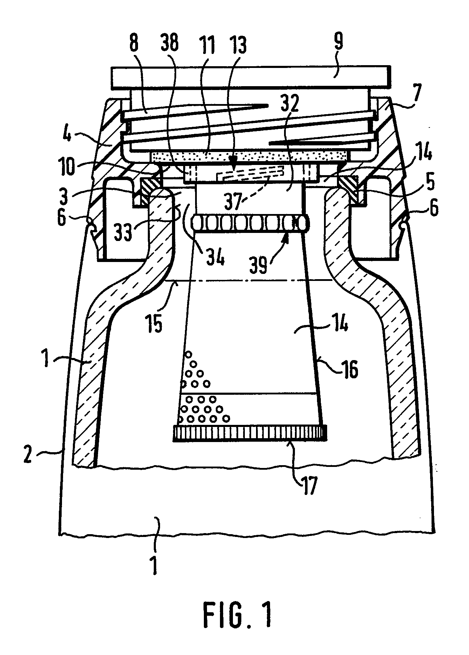

Die in Fig. 1 teilweise dargestellte Isolierkanne besteht aus einem wärmeisolierendem Isoliergefäß 1 und einem dieses umgebenden Schutzgehäuse 2. Im Bereich der Öffnung 3 des Isoliergefäßes 1 schließt ein insgesamt mit 4 bezeichnetes Kopfteil nach oben an, welches gegen den oberen Rand der Öffnung 3 des Isoliergefäßes 1 durch eine Dichtung 5 abgedichtet ist und mit dem Schutzgehäuse 2 auf geeignete Weise bei 6 verbunden ist. Das Kopfteil 4 umfaßt einen zylindrischen Rand 7 mit Innengewinde, wobei der zylindrische Rand 7 auf einer Seite zu einem nicht dargestellten Ausgießer geformt sein kann. Auf der dem nicht dargestellten Ausgießer gegenüberliegenden Seite des Kopfteiles 4 kann ein ebenfalls nicht dargestellter Henkel angeformt sein. In das Innengewinde des Randes 7 ist mit seinem steilgängigen Außengewinde 8 ein insgesamt mit 9 bezeichneter Verschluß eingeschraubt, der durch einen die Öffnung 3 des Isoliergefäßes 2 überdeckenden Schraubstopfen 10 gebildet ist. Mit 11 ist eine an dem Verschluß 9 angeordnete elastische Dichtung bezeichnet, welche sich in aufgeschraubtem Zustand des Verschlusses 9 auf einen Dichtungssitz am Kopfteil 4 auflegt.

An der Unterseite des Verschlusses 9 ist mittels eines allgemein mit 13 bezeichneten Bajonettverschlusses ein Sieb-Hohlkörper 14 befestigt, der sich durch die Öffnung 3 in den Innenraum des Isoliergefäßes 1 erstreckt.

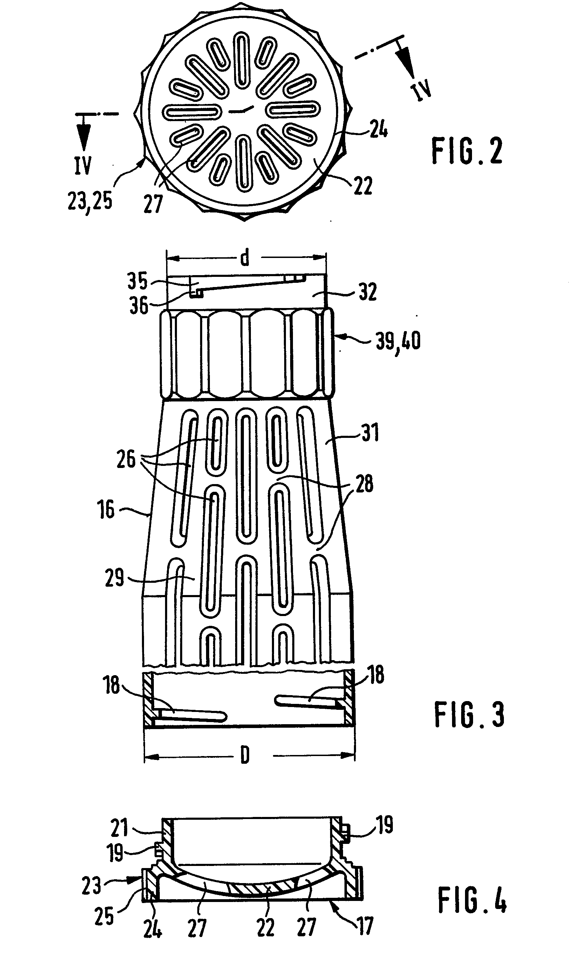

Durch die Anordnung des Sieb-Hohlkörpers 14 ist es möglich, in der Isolierkanne Tee oder dergleichen zuzubereiten. Die Teeblätter oder dergleichen Substanzen werden in den Sieb-Hohlkörper 14 eingegeben. Der Sieb-Hohlkörper 14 muß deshalb so lang bemessen sein, daß die Teeblätter unterhalb des in Fig. 1 mit 15 bezeichneten Flüssigkeitsspiegels der gefüllten Isolierkanne gelangen. Der Sieb-Hohlkörper 14 besteht aus einem hohlzylindrischen Mantel 16 und einem Bodenteil 17, das an dem Verschluß 9 abgewandten Ende des Sieb-Hohlkörpers 14 stirnseitig in den Mantel 16 einschraubbar ist. Die das Einschrauben ermöglichenden Gewindegänge im Mantel 16 und im Bodenteil 17 sind mit 18 und 19 bezeichnet (Fig. 3 und 4). Die Gewindegänge 18 des Mantels 16 springen von seiner Innenwand vor. Die Gewindegänge 19 des Bodenteils 17 sind außenseitig an einem rohrförmigen Wandabschnitt 21 angeformt, der axial von einer Bodenwand 22 ausgeht, die konvex gewölbt ist. Die Bodenwand 22 geht flanschförmig in einen Rand 23 über, der durch einen sich axial erstreckenden Wandabschnitt 24 gebildet ist. Auf der Außenseite des Randes 23 befindet sich eine Rändelung 25 in Form von Umfangsrichtung abwechselnd hintereinanderliegenden Erhöhungen und Vertiefungen, um eine Griffestigkeit zum Ein- und Ausschrauben des Bodenteils 17 zu erreichen.

Im Mantel 16 und in der Bodenwand 22 des Bodenteils 17 sind eine Vielzahl Sieblöcher angeordnet, die durch axiale bzw. radiale Schlitze 26, 27 gebildet sind, die auswärts schießschartenförmig divergieren. Um einen intensiven Kontakt der Flüssigkeit mit den Teeblättern zu ermöglichen, sind eine Vielzahl dicht nebeneinanderliegender Schlitze vorgesehen. Aus Festigkeitsgründen sind die Schlitze 26 im Mantel 16 durch Stege 28 unterbrochen, die in Umfangsrichtung gesehen axial versetzt sind. Hierdurch wird die Festigkeit des Mantels 16 erhöht, der im Bereich der Schlitze 26 aus dünnen Längsstreifen 29 besteht.

In der Bodenwand 22 verlaufen in abwechselnder Reihenfolge kurze und lange Schlitze 27 strahlenförmig. Die radial äußeren Enden der Schlitze 27 liegen auf einem Teilkreis, der nicht dargestellt und auch nicht bezeichnet ist. Die kurzen Schlitze 27 sind deshalb vorgesehen, um in den sich radial auswärts divergierenden Bereichen zwischen zwei langen Schlitzen 27 den Kontakt zwischen der Flüssigkeit und den Teeblättern zu ermöglichen und die Extrahierung der Aromastoffe zu verbessern.

0161566

Das dem Verschluß 9 zugewandte Ende des Mantels 16 ist hohlzylindrisch geformt und im Durchmesser d kleiner bemessen als das ebenfalls zylindrisch geformte, dem Verschluß 9 abgewandete Ende des Mantels 16. Infolgedessen ergibt sich ein mittlerer Abschnitt 31 des Mantels 16, der zur dem Verschluß 9 abgewandten Seite hin divergiert. Der Durchmesser D des größeren Endes bzw. der Durchmesser des Bodenteils 17 ist so groß bemessen, daß der Sieb-Hohlkörper 14 mit Bewegungsspiel durch die Öffnung 3 paßt. Dagegen besteht zwischen dem dem Verschluß 9 zugewandten Ende 32 des Sieb-Hohlkörpers 14 und dem Rand 33 der Öffnung 3 ein verhältnismäßig großer Spalt 34, der beim Ausgießen eine ausreichende Flüssigkeitsströmung gewährleistet. Zum Ausgießen bedarf es bekannterweise . lediglich eines geringfügigen Abhebens der elastischen Dichtung 11 von der Dichtfläche am Kopfteil 4.

Am verjüngten Ende 32 des Sieb-Hohlkörpers 14 sind außenseitig zwei einander diametral gegenüberliegende Ansätze 35 mit Anschlägen 36 angeformt, die in der Verschlußstellung zwei korrespondierende Ansätze 37 am Verschluß 9 hinterfassen. Die Ansätze 37 sind innenseitig an einem hohlzylindrischen Fortsatz 38 angeformt, in den der Sieb-Hohlkörper zwecks Schließens des Bajonett-Verschlusses 13 in bestimmter Stellung eingesetzt und anschließend im Uhrzeigersinn verdreht wird.

Aufgrund der Befestigung des Sieb-Hohlkörpers am Verschluß 9 bilden diese beiden Teile eine Einheit, so daß zum einen der Sieb-Hohlkörper 14 durch das Abheben des Verschlusses 9 aus der Isolierkanne herausgenommen wird und zum anderen ein teilweises Öffnen des Verschlusses 9 zum Zweck des Ausgießens die Halterung des Sieb-Hohlkörpers 14 gewährleistet bleibt.

Sowohl der Mantel 16 als auch das Bodenteil 17 bestehen aus dünnwandigem Kunststoff. Um das Schließen bzw. Lösen des Bajonettverschlusses 13 zu erleichtern, weist der Mantel 16 eine Rändelung 39 auf, die durch in Umfangsrichtung abwechselnd hintereinanderliegende Erhöhungen und Vertiefungen gebildet ist, die an einer Ringschulter 40 ausgeformt sind. Die Ringschulter 40 befindet sich am den Verschluß 9 zugewandten Ende 32 des Sieb-Hohlkörpers 14, um die Perforierung des Mantels 16 nicht zu beeinträchtigen.

Im Rahmen der Erfindung sind auch andere Verschlüsse, z. B. ein Gewinde zur Befestigung des Sieb-Hohlkörpers möglich. Die Erfindung ist auch nicht auf einen Schraubverschluß beschränkt, wie vorher beschrieben. Anstelle eines Schraubverschlusses sind auch Steckverschlüsse in Form von Klemm- und Rastverschlüssen denkbar.

0161566

PATENTANWÄLTE
Dipl.-Ing. H. MITSCHERLICH
Dipl.-Ing. K. GUNSCHMANN
Dipl.-Ing.Dr.rer.nat. W. KÖRBER
Dipl.-Ing. J. SCHMIDT-EVERS
Dipl.-Ing. W. MELZER
EUROPEAN PATENT ATTORNEYS

Telefon (089) 29 66 84-86
Telex 523 155 mitsh d
Telegramme Patentpaap
Telecopier (089) 29 39 63
Psch-Kto. Mchn. 195 75-803
EPA-Kto. 28 000 206

Steinsdorfstraße 10
D-8000 München 22

ROTPUNKT
Dr. Anso Zimmermann
Industriestraße

6434 Niederaula

## A N S P R Ü C H E

1. Verschluß für Isolierkannen oder -flaschen, bestehend aus einem Isoliergefäß und einem dieses umgebenden Schutzgehäuse, wobei der Verschluß in ein mit dem Schutzgehäuse verbundenes Kopfteil einsetzbar ist und aus eihem Kunststoffteil vorzugsweise mit zugeordnetem, sich auf eine Dichtfläche der zu verschließenden Öffnung dichtend anliegendem Dichtring aus elastischem Kunststoff besteht, und wobei mittelbar oder unmittelbar am Verschluß ein in das Isoliergefäß ragender Sieb-Hohlkörper gehalten ist, dadurch gekennzeichnet, daß der Sieb-Hohlkörper (14) an seinem in das Isoliergefäß (1) hineinragenden Ende ein lösbares und wieder festlegbares Bodenteil (17) aufweist.

2. Isolierkanne oder -flasche nach Anspruch 1, dadurch gekennzeichnet, daß der Sieb-Hohlkörper (14) wenigstens auf einem Abschnitt (31) zu seinem in das Isoliergefäß (1) hineinragenden Ende hin wenigstens innen divergiert.

3. Isolierkanne oder -flasche nach Anspruch 1 oder 2, dadurch gekennzeichnet, daß das Bodenteil (17) topfförmig mit einem rohrförmigen Wandabschnitt (21) und einer sich darin etwa radial erstreckenden Bodenwand (22) gebildet ist.

4. Isolierkanne oder -flasche nach einem der Ansprüche 1 bis 3, dadurch gekennzeichnet, daß das dem Sieb-Hohlköprer (14) abgewandte Ende des Bodenteils (17) einen Kragen (23) bevorzugt mit einer die Griffestigkeit erhöhenden Rändelung (25) oder dergleichen aufweist.

5. Isolierkanne oder -flasche nach einem der Ansprüche 1 bis 4, dadurch gekennzeichnet, daß die Bodenwand (22) des Bodenteils (17) konvex gewölbt ist und radiale Sieblöcher (27) aufweist.

6. Isolierkanne oder -flasche nach Anspruch 5, dadurch gekennzeichnet, daß die Sieblöcher in der Bodenwand (22) durch strahlenförmig angeordnete Schlitze (27) gebildet sind, von denen in Umfangsrichtung jeweils ein kurzer Schlitz einem langen Schlitz folgt, wobei die radial äußeren Enden der Schlitze (27) auf einem Teilkreis liegen.

7. Isolierkanne oder -flasche nach einem der Ansprüche 1 bis 6, dadurch gekennzeichnet, daß der Sieb-Hohlkörper (14) einen hohlzylindrischen oder hohlkegeligen Mantel (16) oder Mantelabschnitt (31) aufweist.

8. Isolierkanne oder -flasche nach einem der Ansprüche 1 bis 7, dadurch gekennzeichnet, daß die Sieblöcher im Mantel (16) durch eine Vielzahl von sich in seiner Längsrichtung erstreckenden Schlitzen (26) gebildet sind.

9. Isolierkanne oder -flasche nach Anspruch 8, dadurch gekennzeichnet, daß durch Stege (28) unterbrochene Schlitze (27) vorgesehen sind, wobei bevorzugt die Stege (28) in Umfangsrichtung gesehen axial versetzt sind.

10. Isolierkanne oder -flasche nach einem der Ansprüche 1 bis 9, dadurch gekennzeichnet, daß die Sieblöcher (26, 27) auswärts schießschartenförmig divergieren.

11. Isolierkanne oder -flasche nach einem der Ansprüche 1 bis 10, dadurch gekenzeichnet, daß der Sieb-Hohlkörper (14) lösbar, insbesondere formschlüssig mit dem Verschluß (9) verbunden ist.

12. Isolierkanne oder -flasche nach Anspruch 11, dadurch gekennzeichnet, daß der Sieb-Hohlkörper (14) durch einen Schraub- oder Bajonettverschluß (13) am Verschluß (9) festlegbar ist.

0161566

1/2

FIG. 1

FIG.2

FIG.3

FIG.4